# FASCICULE DE BREVET EUROPEEN

(11) **EP 0 802 100 B1**
(45) Date de publication et mention de la délivrance du brevet: **12.09.2001**
(21) Numéro de dépôt: 97440039.2
(22) Date de dépôt: 18.04.1997
(51) Int. Cl.: B61D 15/06, B61D 17/06, B61F 19/04, B61F 1/10, B61G 9/04, B62D 21/15

(54) **Véhicule ferroviaire à cabinet de conduite comportant une structure absorbeuse d'énergie à déformation progressive**
Schienenfahrzeug mit einem Fahrerstand, der eine energieaufnehmende Struktur mit progressiver Verformung aufweist
Railway vehicle with a driverscompartment having an energy absorbing structure with progressive deformation

(30) Priorité: 19.04.1996 FR 9605203
(43) Date de publication de la demande: 22.10.1997
(73) Titulaire: Alstom DDF, 67110 Niederbronn Les Bains (FR)
(72) Inventeur: Letzelter, Alain, 67110 Reichshoffen (FR); Fuchs, Aloise, 67110 Niederbronn-les-Bains (FR); Preiss, Paul, 67110 Reichshoffen (FR); Huss, Pierre, 67590 Ohlungen (FR); Tritz, Bernard, 67110 Niederbronn-les-Bains (FR); Dannawi, Marvan, 44240 La Chapelle sur Erge (FR)
(74) Mandataire: Gosse, Michel

(56) Documents cités:
- EP-A- 0 655 565
- DE-C- 635 018
- GB-A- 2 257 770
- REVUE GENERALE DE CHEMINS DE FER, no. 11, Novembre 1993, PARIS, FR, pages 59-63, XP000414426
- REVUE GENERALE DE CHEMINS DE FER, no. 11, Novembre 1993, PARIS, FR, pages 45-57, XP000414425

## Description

La présente invention concerne le domaine de la construction métallique de véhicules, en particulier ferroviaires à cabine de conduite, et a pour objet un tel véhicule comportant une structure absorbeuse d'énergie à déformation progressive.

Une telle structure a pour fonction de protéger les passagers et le conducteur du véhicule en cas de collision.

Les véhicules ferroviaires existant actuellement sont généralement équipés à leurs parties d'extrémité d'une structure destinée à supporter les sollicitations que subit le véhicule en conditions normales de circulation et lors de chocs à faible vitesse, dits chocs "d'accostage".

Cependant, en cas de chocs importants, notamment à vitesse relativement élevée, les véhicules existants ne présentent pas de disposition de protection des passagers et du conducteur par déformation préférentielle d'une partie de leur structure et absorption d'énergie, de sorte que lesdits passagers et le conducteur sont exposés à un risque important de dommages corporels en cas de tels chocs, le conducteur ne pouvant en particulier pas se réfugier dans une structure permettant sa survie.

A cet effet, il a été proposé, par FR-A-2 698 840 un véhicule ferroviaire à cabine de conduite comportant une structure métallique absorbeuse d'énergie, consistant en des zones de déformation plastique dynamique, formées d'éléments absorbeurs d'énergie fixes ou interchangeables, prévues aux extrémités dudit véhicule. Une telle structure permet une absorption d'énergie sur une longueur importante par déformation plastique dynamique de zones prédéterminées, à savoir de l'avant de la cabine de conduite et au niveau des attelages des intercirculations.

Un véhicule ferroviaire à cabine de conduite comportant une structure absorbeuse d'énergie est connu également de EP-A-0 655 556, du même Demandeur.

Cependant, dans ce mode de réalisation, il est certes obtenu une déformation des zones concernées correspondant à une absorption totale de l'énergie du choc, mais cette déformation n'est pas totalement maîtrisée dans sa progression.

La présente invention a pour but de pallier ces inconvénients en proposant un véhicule ferroviaire à cabine de conduite comportant une structure absorbeuse d'énergie à déformation progressive permettant de contrôler le sens de progression de la déformation lors d'un choc.

Cet objectif est atteint au moyen des caractéristiques inclues dans la Revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue partielle en élévation latérale d'un véhicule équipé d'une structure conforme à l'invention ;
la figure 2 est une vue éclatée en perspective de la zone de déformation plastique dynamique prévue à l'avant du véhicule ;
la figure 3 est une vue en perspective, à plus grande échelle et partiellement en coupe représentant certains éléments progressivement déformables de l'avant du véhicule ;
les figures 4 à 7 sont des vues partielles en perspective et en coupe représentant l'avant du véhicule pendant différentes phases d'absorption d'énergie, et
la figure 8 est une vue schématique en coupe du dispositif d'attelage au niveau de l'intercirculation.

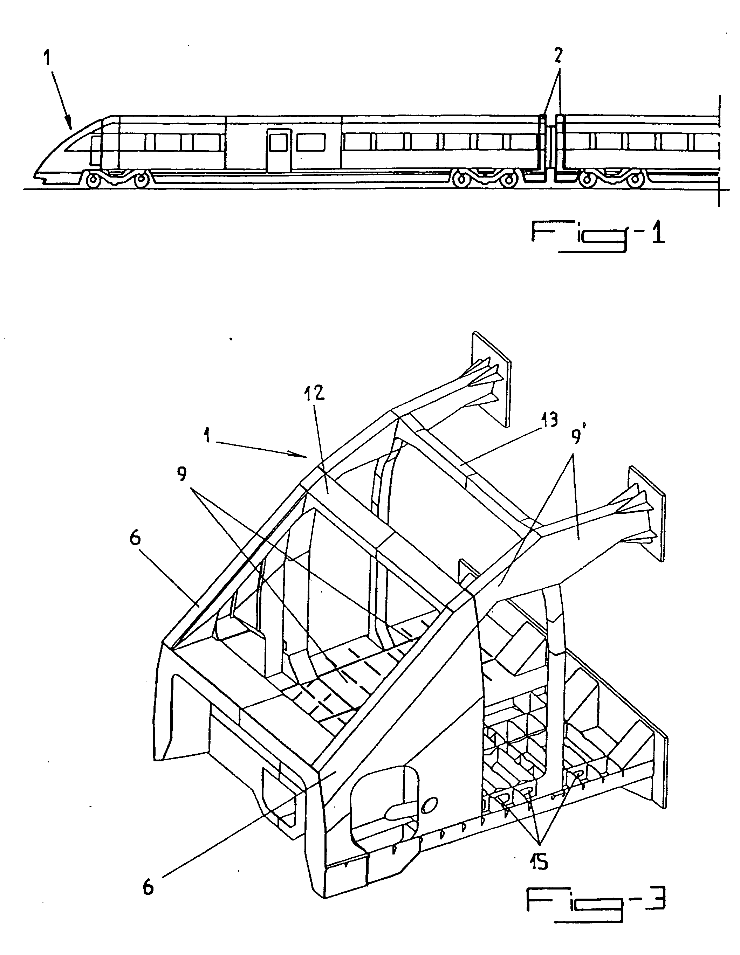

Le véhicule ferroviaire à cabine de conduite représenté plus particulièrement, à titre d'exemple, à la figure 1 des dessins annexés, comporte une structure métallique absorbeuse d'énergie, qui consiste en des zones 1 et 2 de déformation plastique dynamique, formées d'éléments absorbeurs d'énergie fixes ou interchangeables, prévues respectivement aux extrémités avant et d'intercirculation dudit véhicule.

Conformément à l'invention, les zones 1 et 2 de déformation plastique dynamique présentent des moyens à propriété de résistance mécanique différentes entraînant des phases de déformation progressive à partir de l'extrémité correspondante du véhicule.

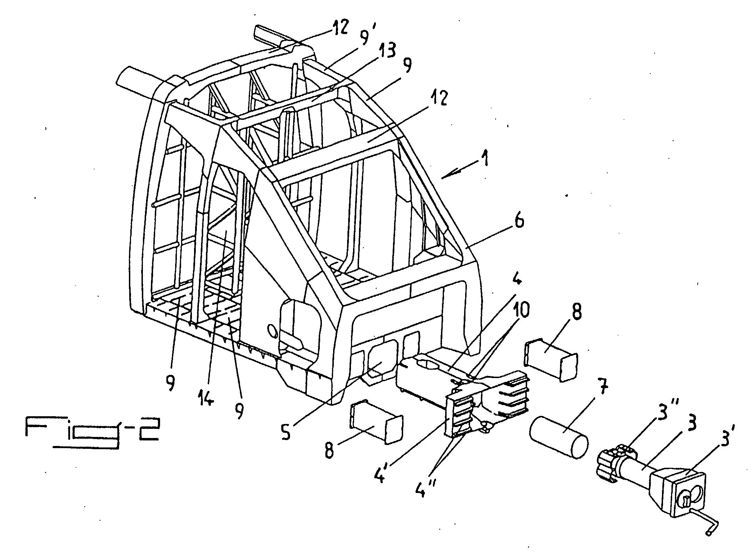

A cet effet, comme le montre la figure 2 des dessins annexés, les moyens à propriété de résistance mécanique différentes de la zone 1 de déformation plastique dynamique, prévue à l'extrémité avant du véhicule, sont constitués par un attelage automatique 3 lié rigidement à un caisson 4 disposé dans un élément de châssis 5, formé dans une partie d'extrémité indéformable 6 de la caisse du véhicule, par un premier élément absorbeur d'énergie 7 inséré dans le caisson 4 et s'appuyant contre l'extrémité arrière de l'attelage automatique 3, par au moins un second élément absorbeur d'énergie 8 reliant la partie avant du caisson 4 à la face avant de la partie d'extrémité indéformable 6 de la caisse du véhicule et par au moins une série d'éléments 9 et 9' à déformation plastique programmée, prévus entre la partie d'extrémité indéformable 6 de la caisse du véhicule et la caisse du véhicule proprement dite.

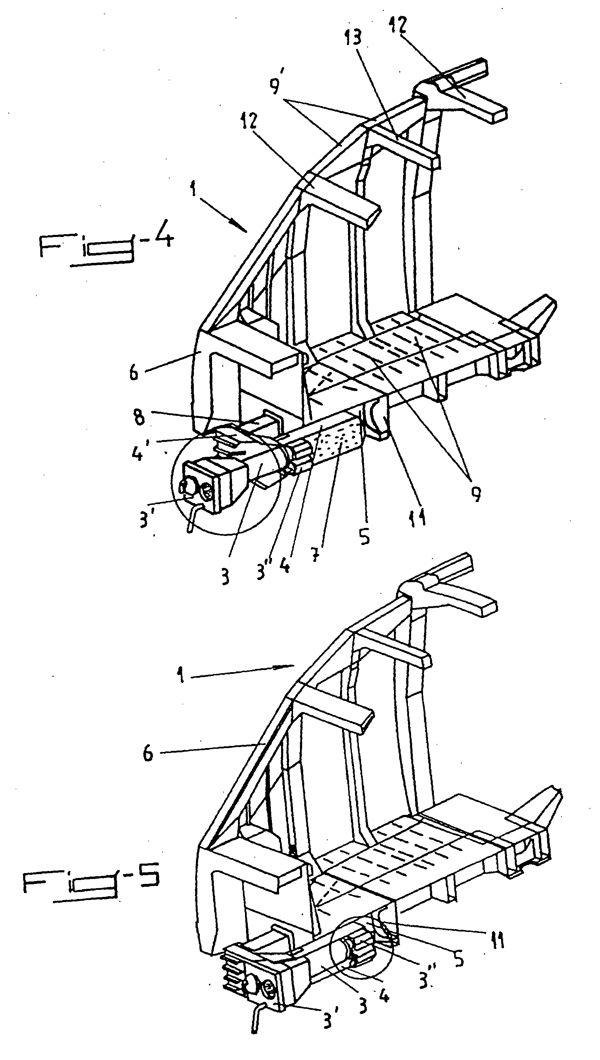

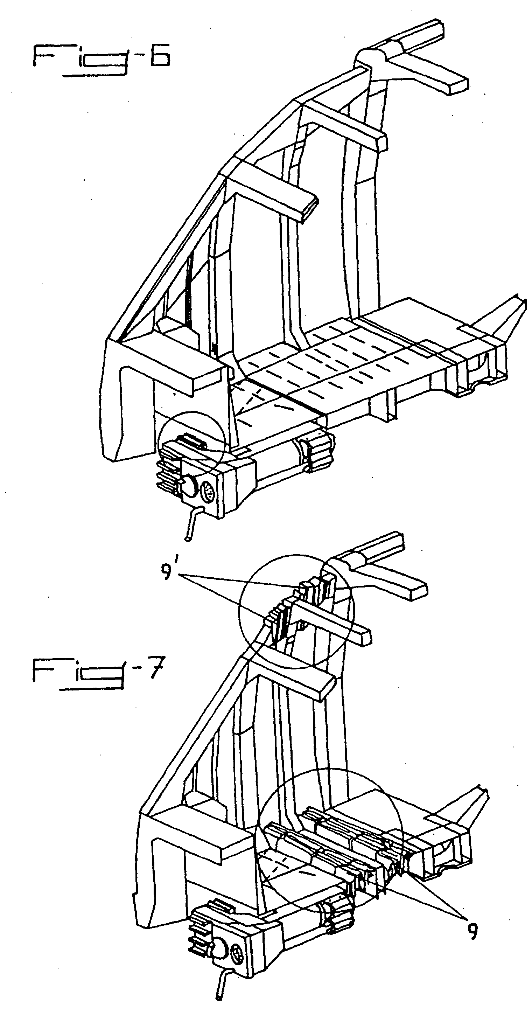

L'attelage automatique 3 est constitué par une tête d'attelage 3' et par un corps reliant cette tête à un support d'attelage 3" lié rigidement au caisson 4 par l'intermédiaire de boulons fusibles 10 (figures 2 et 4). Le montage ainsi réalisé permet d'assurer le maintien en position de service de l'attelage automatique 3 dans une première phase d'absorption d'énergie correspondant à un choc n'excédant pas une vitesse de l'ordre de 7 km/h, correspondant à une sollicitation mécanique des boulons fusibles 10 inférieure à leur limite de rupture par cisaillement, ledit attelage automatique 3 réalisant alors l'absorption d'énergie sans déformation (figure 4).

Le premier élément absorbeur d'énergie 7, inséré dans le caisson 4 et s'appuyant contre l'extrémité arrière de l'attelage automatique 3, est avantageusement constitué par une pièce en matière composite destructible sous forme d'un tube reliée par son extrémité avant au support d'attelage 3" de l'attelage automatique 3 et s'appuyant par son extrémité arrière sur le fond du caisson 4, ce fond présentant au moins une ouverture, non représentée, d'éjection de la matière constitutive de l'élément absorbeur d'énergie 7, ladite ouverture ayant une section inférieure à celle du tube. De préférence, le tube constituant l'élément absorbeur d'énergie 7 s'appuie sur un élément de section correspondante du fond du caisson 4, cet élément d'appui présentant deux ouvertures d'éjection de la matière constitutive de l'élément absorbeur d'énergie 7, diamétralement opposées.

Le caisson 4 présente une partie arrière tubulaire de réception du corps et du support d'attelage 3" de l'attelage automatique 3 et une partie antérieure évasée de réception de la tête 3' dudit attelage automatique 3 pourvue de bords latéraux 4' destinés à coopérer avec le ou les seconds éléments absorbeurs d'énergie 8, la face avant de ces bords 4' étant munie de dispositifs 4" d'antichevauchement. Ces dispositifs 4" sont de type connu et permettent, par coopération de forme, d'éviter un déplacement vertical mutuel entre deux extrémités de voitures.

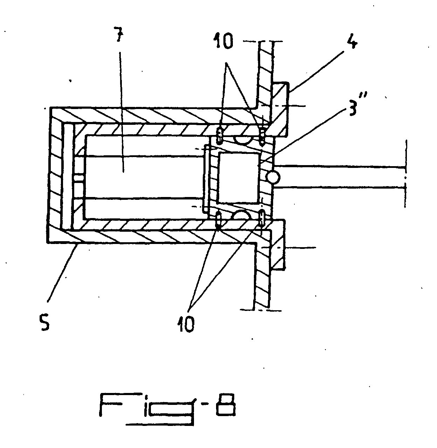

Ainsi, dans le cas d'un choc d'une intensité supérieure à la limite de résistance de rupture par cisaillement des boulons fusibles 10, ces derniers sont détruits et l'attelage automatique 3 est poussé vers le fond de la partie arrière tubulaire du caisson 4, entraînant l'élément absorbeur d'énergie 7, qui est alors écrasé dans ledit caisson 4, sa matière constitutive étant éjectée à travers la ou les ouvertures d'éjection prévues dans ledit caisson 4 (figure 5). A la fin de cette phase d'absorption d'énergie, l'attelage automatique 3 est entièrement logé dans le caisson 4, l'élément absorbeur d'énergie 7 étant totalement détruit et expulsé dudit caisson. Cette deuxième phase d'absorption d'énergie correspond à une vitesse de choc comprise entre 7 km/h et 18 km/h et permet une remise en état rapide par simples remplacement de l'élément absorbeur d'énergie 7 et mise en place de nouveaux boulons fusibles 10.

L'élément de châssis 5, formé dans une partie d'extrémité indéformable 6, présente, d'une part, à son extrémité opposée à celle recevant le caisson 4, une ouverture 11 destinée à permettre l'éjection de la matière constitutive de l'élément absorbeur d'énergie 7 lors de l'écrasement de ce dernier et, d'autre part, une longueur au moins égale à celle de la partie arrière tubulaire du caisson 4 (figures 4 à 7).

Les seconds éléments absorbeurs d'énergie 8 reliant la partie avant du caisson 4 à la face avant de la partie d'extrémité indéformable 6 de la caisse du véhicule se présentent sous forme de poutres déformables boulonnées à leurs extrémités, respectivement sur l'avant de la partie d'extrémité indéformable 6 de la caisse du véhicule et sur la face arrière des bords 4' du caisson 4, ces poutres déformables étant constituées chacune par un assemblage de tôles à déformation prédéterminée. Des structures déformables de ce type sont notamment connues par FR-A-2 694 255.

Ces seconds éléments absorbeurs d'énergie 8 permettent, comme le montre la figure 6 des dessins annexés, une troisième phase d'absorption de chocs par déformation plastique irréversible, pour des vitesses de choc allant jusqu'à 32 km/h.

La constitution de l'élément de châssis 5 permet, lors de la troisième phase d'absorption d'énergie, un escamotage complet de la partie arrière tubulaire de réception du corps et du support d'attelage 3" de l'attelage automatique 3, du caisson 4 avec l'attelage automatique 3, dans ledit élément de châssis 5. Les parties avant de l'attelage automatique 3 et du caisson 4 logent alors dans le bouclier 6' prévu à l'extrémité avant de la partie d'extrémité indéformable 6 de la caisse du véhicule et suppriment ainsi totalement le risque de béquillage.

La ou les séries d'éléments 9 et 9' à déformation plastique programmée, prévus entre la partie d'extrémité indéformable 6 de la caisse du véhicule et la caisse du véhicule proprement dite se présentent avantageusement sous forme d'assemblages de tôles à déformation progressive à partir de l'avant vers l'arrière du véhicule (figures 3 et 7). Ces éléments 9 et 9' constituent le châssis s'étendant entre la partie d'extrémité indéformable 6 de la caisse du véhicule et la caisse du véhicule proprement dite et sont reliés à des arceaux rigides 12 de ces derniers.

Les éléments 9 et 9' sont, de préférence, prévus par paires et sont reliés à un arceau intermédiaire 13 délimitant latéralement une ouverture de porte et un local technique. Ainsi, les éléments 9 et 9' entre deux arceaux sont limités à un nombre restreint, de sorte que leur déformation peut s'effectuer uniquement par écrasement, sans flambage généralisé.

Selon une caractéristique de l'invention, la cabine de conduite du véhicule est pourvue d'un tunnel de survie 14 sous forme d'une cage en treillis tubulaire, monté entre une traverse de pivot 16 et le toit de la cabine et fixé sur l'arceau rigide 12 délimitant la caisse du véhicule proprement dite (figure 4).

De préférence, dans le cas de la prévision d'une paire d'éléments 9 et 9' s'étendant de part et d'autre d'un arceau intermédiaire 13, les éléments 9' situés entre l'arceau intermédiaire 13 et l'arceau rigide 12 délimitant la caisse du véhicule proprement dite sont disposés de telle manière que leur déformation progressive s'effectue à partir de l'arrière vers l'avant du véhicule.

Ces éléments 9 et 9' sont constitués, comme le montre la figure 3 des dessins annexés, sous forme de caissons, dont les faces latérales et centrales s'étendant parallèlement à l'axe longitudinal du véhicule présentent des allégements de matière sous forme d'ouvertures 15 ou des prédéformations sous forme d'ondulations de matière. Les ouvertures 15 des éléments 9 et 9' présentent avantageusement une section décroissante en direction de la déformation et les ondulations des éléments 9 et 9' présentent un amplitude décroissante dans la même direction. Ainsi, la résistance des éléments 9 et 9' s'accroît au fur et à mesure de la déformation de la zone 1.

Conformément à une autre caractéristique de l'invention, les tôles formant les assemblages de tôles constitutifs des éléments 9 et 9' présentent une épaisseur croissante en direction de la déformation. Ainsi, la résistance des éléments 9 et 9' augmente également pendant la phase de déformation.

Cette déformation des éléments 9 et 9' correspond à une quatrième phase d'absorption d'énergie, qui est déclenchée à partir d'une vitesse de l'ordre de 32 km/h et permet de préserver un espace suffisant pour le tunnel de survie 14.

Le fait de prévoir, entre l'arceau intermédiaire 13 et l'arceau 12 délimitant la caisse du véhicule proprement dite, des éléments 9 et 9' dont la déformation s'effectue progressivement, permet d'optimaliser la déformation du tronçon de cabine correspondant en protégeant simultanément le tunnel 14 et les armoires techniques pouvant être ménagées de part et d'autre de ce dernier.

Les moyens à propriété de résistance mécanique différentes de la zone arrière 2 de déformation plastique dynamique, prévue à l'extrémité arrière du véhicule sont constitués, comme le montre la figure 8 des dessins annexés, par un support d'attelage 3" relié à un corps intermédiaire de barre d'attelage et coopérant avec un caisson 4, logé dans un élément de châssis 5 de la zone arrière 2 et fixé audit châssis, ledit support d'attelage 3" s'appuyant dans ledit caisson 4 sur un élément absorbeur d'énergie 7 et étant relié audit caisson 4 par l'intermédiaire de boulons fusibles 10, le châssis 5 étant pourvu, en outre, à son extrémité, de dispositifs d'antichevauchement non représentés. Il résulte de ce mode de réalisation que lors d'un choc violent, la barre d'attelage exerce sur le support d'attelage 3" un effort tel que les boulons fusibles 10 soient cisaillés et que l'élément absorbeur d'énergie 7 soit écrasé sur le fond du caisson 4. La pénétration de la barre d'attelage 3 dans le caisson 4 supprime ainsi totalement le risque de béquillage et des dispositifs d'antichevauchement, de type connu, permettent, par coopération de forme, d'éviter un déplacement vertical mutuel entre deux extrémités de voitures.

Grâce à l'invention, il est possible de réaliser un véhicule ferroviaire à cabine de conduite comportant une structure absorbeuse d'énergie, constituée par des zones de déformation plastique dynamique, formées d'éléments absorbeurs d'énergie fixes ou interchangeables, permettant une absorption de l'énergie de choc par phases progressives et assurant une sécurité maximale pour le conducteur et les passagers.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Véhicule ferroviaire à cabine de conduite comportant une structure absorbeuse d'énergie consistant en des zones (1 et 2) de déformation plastique dynamique, formées d'éléments absorbeurs d'énergie fixes ou interchangeables, prévues respectivement aux extrémités avant et d'intercirculation dudit véhicule, les zones (1 et 2) de déformation plastique dynamique présentant des moyens à propriété de résistance mécanique différentes entraînant des phases de déformation progressive à partir de l'extrémité correspondante du véhicule, **caractérisé en ce que** les moyens à propriété de résistance mécanique différentes de la zone (1) de déformation plastique dynamique, prévue à l'extrémité avant du véhicule, sont constitués par un attelage automatique (3) lié rigidement à un premier caisson (4) disposé dans un élément de châssis (5), formé dans une partie d'extrémité indéformable (6) de la caisse du véhicule, par un premier élément absorbeur d'énergie (7) inséré dans le caisson (4) et s'appuyant contre l'extrémité arrière de l'attelage automatique (3), par au moins un second élément absorbeur d'énergie (8) reliant la partie avant du caisson (4) à la face avant de la partie d'extrémité indéformable (6) de la caisse du véhicule et par au moins une série d'éléments (9 et 9') à déformation plastique programmée, prévus entre la partie d'extrémité indéformable (6) de la caisse du véhicule et la caisse du véhicule proprement dite.

2. Véhicule ferroviaire, suivant la revendication 1, **caractérisé en ce que** l'attelage automatique (3) est constitué par une tête d'attelage (3') et par un corps reliant cette tête à un support d'attelage (3") lié rigidement au caisson (4) par l'intermédiaire de boulons fusibles (10).

3. Véhicule ferroviaire, suivant l'une quelconque des revendications 1 et 2, **caractérisé en ce que** le premier élément absorbeur d'énergie (7), inséré dans le caisson (4) et s'appuyant contre l'extrémité arrière de l'attelage automatique (3) est constitué par une pièce en matière composite destructible sous forme d'un tube reliée par son extrémité avant au support d'attelage (3") de l'attelage automatique (3) et s'appuyant par son extrémité arrière sur le fond du caisson (4), ce fond présentant au moins une ouverture d'éjection de la matière constitutive de l'élément absorbeur d'énergie (7), ladite ouverture ayant une section inférieure à celle du tube.

4. Véhicule ferroviaire, suivant la revendication 3, **caractérisé en ce que** le tube constituant l'élément absorbeur d'énergie (7) s'appuie sur un élément de section correspondante du fond du caisson (4), cet élément d'appui présentant deux ouvertures d'éjection de la matière constitutive de l'élément absorbeur d'énergie(7), diamétralement opposées.

5. Véhicule ferroviaire, suivant l'une quelconque des revendications 1 à 4, **caractérisé en ce que** le caisson (4) présente une partie arrière tubulaire de réception du corps et du support d'attelage (3") de l'attelage automatique (3) et une partie antérieure évasée de réception de la tête (3') dudit attelage automatique (3) pourvue de bords latéraux (4') destinés à coopérer avec le ou les seconds éléments absorbeurs d'énergie (8), la face avant de ces bords (4') étant munie de dispositifs (4") d'antichevauchement.

6. Véhicule ferroviaire, suivant l'une quelconque des revendications 1 à 5, **caractérisé en ce que** l'élément de châssis (5), formé dans une partie d'extrémité indéformable (6), présente, d'une part, à son extrémité opposée à celle recevant le caisson (4), une ouverture (11) destinée à permettre l'éjection de la matière constitutive de l'élément absorbeur d'énergie (7) lors de l'écrasement de ce dernier et, d'autre part, une longueur au moins égale à celle de la partie arrière tubulaire du caisson (4).

7. Véhicule ferroviaire, suivant l'une quelconque des revendications 1 à 3, 5 et 6, **caractérisé en ce que** le ou les un seconds éléments absorbeurs d'énergie (8) reliant la partie avant du caisson (4) à la face avant de la partie d'extrémité indéformable (6) de la caisse du véhicule se présentent sous forme de poutres déformables boulonnées à leurs extrémités, respectivement sur l'avant de la partie d'extrémité indéformable (6) de la caisse du véhicule et sur la face arrière des bords (4') du caisson (4), ces poutres déformables étant constituées chacune par un assemblage de tôles à déformation prédéterminée.

8. Véhicule ferroviaire, suivant la revendication 1, **caractérisé en ce que** la ou les séries d'éléments (9 et 9') à déformation plastique programmée, prévus entre la partie d'extrémité indéformable (6) de la caisse du véhicule et la caisse du véhicule proprement dite se présentent sous forme d'assemblages de tôles à déformation progressive à partir de l'avant vers l'arrière du véhicule.

9. Véhicule ferroviaire, suivant la revendication 8, **caractérisé en ce que** les éléments (9 et 9') à déformation plastique programmée constituent le châssis s'étendant entre la partie d'extrémité indéformable (6) de la caisse du véhicule et la caisse du véhicule proprement dite et sont reliés à des arceaux rigides (12) de ces derniers.

10. Véhicule ferroviaire, suivant l'une quelconque des revendications 8 et 9, **caractérisé en ce que** les éléments (9 et 9') à déformation plastique programmée sont prévus par paires et sont reliés à un arceau intermédiaire (13) délimitant latéralement une ouverture de porte et un local technique.

11. Véhicule ferroviaire, suivant l'une quelconque des revendications 1 et 8 à il, **caractérisé en ce que** la cabine de conduite est pourvue d'un tunnel de survie (14) sous forme d'une cage en treillis tubulaire, monté entre une traverse de pivot (16) et le toit de la cabine et fixé sur l'arceau rigide (12) à délimitant la caisse du véhicule proprement dite.

12. Véhicule ferroviaire, suivant la revendication 10, **caractérisé en ce que** les éléments (9') à déformation plastique programmée situés entre l'arceau intermédiaire (13) et l'arceau rigide (12) délimitant la caisse du véhicule proprement dite sont disposés de telle manière que leur déformation progressive s'effectue à partir de l'arrière vers l'avant du véhicule.

13. Véhicule ferroviaire, suivant l'une quelconque des revendications 1 et 8 à 12, **caractérisé en ce que** les éléments (9 et 9') à déformation plastique programmée sont constitués sous forme de caissons, dont les faces latérales et centrales s'étendant parallèlement à l'axe longitudinal du véhicule présentent des allégements de matière sous forme d'ouvertures *(15)* ou des prédéformations sous forme d'ondulations de matière.

14. Véhicule ferroviaire, suivant la revendication 13, **caractérisé en ce que** les ouvertures (15) des éléments (9 et 9') à déformation plastique programmée présentent avantageusement une section décroissante en direction de la déformation et les ondulations présentent un amplitude décroissante dans la même direction.

15. Véhicule ferroviaire, suivant l'une quelconque des revendications 1 et 8 à 14, **caractérisé en ce que** les tôles formant les assemblages de tôles constitutifs des éléments (9 et 9') à déformation plastique programmée présentent une épaisseur croissante en direction de la déformation.

16. Véhicule ferroviaire, suivant l'une quelconque des revendications 1 à 7, **caractérisé en ce que** les moyens à propriété de résistance mécanique différentes de la zone arrière (2) de déformation plastique dynamique, prévue à l'extrémité arrière du véhicule sont constitués par un support d'attelage (3") relié à un corps intermédiaire de barre d'attelage et coopérant avec un caisson (4), logé dans un élément de châssis (5) de la zone arrière (2) et fixé audit châssis, ledit support d'attelage (3") s'appuyant dans ledit caisson (4) sur un élément absorbeur d'énergie (7) et étant relié audit caisson (4) par l'intermédiaire de boulons fusibles (10), le chassis (5) étant pourvu , en outre, à son extrémité, de dispositifs d'antichevauchement.

17. Véhicule ferroviaire, suivant l'une quelconque des revendications 1, 3 à 7 et 16, **caractérisé en ce que** les éléments absorbeurs d'énergie (7 et 8) sont réalisés sous forme d'éléments interchangeables pouvant facilement être remplacés en cas de chocs destructeurs.

## Claims

1. A rail vehicle with a driver's cab including an energy-absorbing structure consisting of respective dynamic plastic deformation areas (1 and 2) formed of fixed or interchangeable energy-absorbing members at front and between-cars ends of said vehicle, the dynamic plastic deformation areas (1 and 2) having means with different mechanical strength properties leading to progressive-deformation phases from the corresponding end of the vehicle, **characterised in that** the means with different mechanical properties of the dynamic plastic deformation area (1) at the front end of the vehicle consist of an automatic coupling (3) connected rigidly to a first box-section (4) disposed in a chassis member (5) formed in a non-deformable end part (6) of the body of the vehicle, a first energy-absorbing member (7) inserted in the box-section (4) and bearing against the rear end of the automatic coupling (3), a second energy-absorbing member (8) connecting the front part of the box-section (4) to the front face of the non-deformable end part (6) of the body of the vehicle, and a series of members (9 and 9') which undergo programmed plastic deformation disposed between the non-deformable end part (6) of the body of the vehicle and the body itself.

2. A rail vehicle according to claim 1, **characterised in that** the automatic coupling (3) consists of a coupling head (3') and a body connecting said head to a coupling support (3") connected rigidly to the box-section (4) by breakable bolts (10).

3. A rail vehicle according to either claim 1 or claim 2, **characterised in that** the first energy-absorbing member (7) inserted in the box-section (4) and bearing against the rear end of the automatic coupling (3) consists of a composite material destructible component in the form of a tube connected at its front end to the coupling support (3") of the automatic coupling (3) and with its rear end bearing on the end wall of the box-section (4), that end wall having an opening in it of smaller section than the tube for ejection of the material of the energy-absorbing member (7).

4. A rail vehicle according to claim 3, **characterised in that** the tube constituting the energy-absorbing member (7) bears on a member of corresponding section of the end wall of the box-section (4) having two diametrally opposite openings in it for ejecting the material of the energy-absorbing member (7).

5. A rail vehicle according to any of claims 1 to 4, **characterised in that** the box-section (4) has a tubular rear part to receive the body and the coupling support (3") of the automatic coupling (3) and a flared front part to receive the head (3') of said automatic coupling (3) provided with lateral rim (4') adapted to cooperate with the second energy-absorbing member or members (8), the front face of the rims (4') being provided with anti-override devices (4").

6. A rail vehicle according to any of claims 1 to 5, **characterised in that** the chassis member (5) formed in a non-deformable end part (6) is at least as long as the tubular rear part of the box-section (4) and has at the end opposite that receiving the box-section (4) an opening (11) to enable ejection of the material of the energy-absorbing member (7) during crushing of the latter.

7. A rail vehicle according to any of claims 1 to 3, 5 or 6, **characterised in that** the second energy-absorbing member or members (8) connecting the front part of the box-section (4) to the front face of the non-deformable end part (6) of the body of the vehicle takes the form of deformable beams bolted at their respective ends to the front of the non-deformable end part (6) of the body of the vehicle and to the rear face of the rims (4') of the box-section (4), each deformable beam consisting of an assembly of plates which deform in a predetermined way.

8. A rail vehicle according to claim 1, **characterised in that** the series of members (9 and 9') that undergo programmed plastic deformation between the non-deformable end part (6) of the body of the vehicle and the body itself take the form of assemblies of plates which deform progressively from the front towards the rear of the vehicle.

9. A rail vehicle according to claim 8, **characterised in that** the members (9 and 9') that undergo programmed plastic deformation constitute a chassis between the non-deformable end part (6) of the body of the vehicle and the body itself and are connected to rigid arched members (12) of the latter.

10. A rail vehicle according to either claim 8 or claim 9, **characterised in that** the members (9 and 9') that undergo programmed plastic deformation are provided in pairs and are joined to an intermediate arched member (13) delimiting laterally a door opening and a technical area.

11. A rail vehicle according to any of claims 1 and 8 to it [sic], **characterised in that** the driver's cab is provided with a survival tunnel (14) in the form of a tubular mesh cage mounted between a pivot crossmember (16) and the roof of the cab and fixed to the rigid arched member (12) delimiting the body of the vehicle.

12. A rail vehicle according to claim 10, **characterised in that** the members (9') that undergo programmed plastic deformation between the intermediate arched member (13) and the rigid arched member (12) delimiting the body of the vehicle are disposed so that they deform progressively from the rear towards the front of the vehicle.

13. A rail vehicle according to any of claims 1 and 8 to 12, **characterised in that** the members (9 and 9') that undergo programmed plastic deformation take the form of box-sections whose lateral and central faces are parallel to the longitudinal axis of the vehicle and are weakened by openings (15) or corrugations.

14. A rail vehicle according to claim 13, **characterised in that** the openings (15) in the members (9 and 9') that undergo programmed plastic deformation advantageously have a section that decreases in the direction of deformation and the corrugations advantageously have an amplitude decreasing in the same direction.

15. A rail vehicle according to any of claims 1 and 8 to 14, **characterised in that** the plates forming the assembly of plates constituting the members (9 and 9') that undergo programmed plastic deformation have a thickness increasing in the direction of deformation.

16. A rail vehicle according to any of claims 1 to 7, **characterised in that** the means with different mechanical strength properties of the rear dynamic plastic deformation area (2) at the rear end of the vehicle consist of a coupling support (3") connected to an intermediate coupling bar body and co-operating with a box-section (4) housed in a chassis member (5) of the rear area (2) and fixed to said chassis, said coupling support (3") bearing inside said box-section (4) on an energy-absorbing member (7) and being connected to said box section (4) by breakable bolts (10), and the chassis (5) being further provided at its end with anti-override devices.

17. A rail vehicle according to any of claims 1, 3 to 7 and 16, **characterised in that** the energy-absorbing members (7 and 8) take the form of interchangeable members that can be replaced readily in the event of a destructive impact.

## Patentansprüche

1. Eisenbahnfahrzeug mit Fahrerkabine mit einer energieabsorbierenden Struktur, gebildet aus zwei Zonen (1 und 2) zur dynamischen, plastischen Deformation, gebildet aus festen oder austauschbaren energieabsorbierenden Elementen, jeweils vorgesehen an dem vorderen Ende und zwischen Fahrzeugen, wobei die Zonen (1 und 2) zur dynamische, plastischen Deformation Einrichtungen aufweisen, mit unterschiedlich mechanischen Widerstandseigenschaften, die progressive Deformationsphasen auslösen, ausgehend von dem korrespondierenden Ende des Fahrzeugs, **dadurch gekennzeichnet, dass** die Einrichtungen mit unterschiedlichen, mechanischen Widerstandseigenschaften der Zone (1) der dynamischen, plastischen Deformation, vorgesehen am vorderen Ende des Fahrzeugs, aus einer automatischen Kopplung (3) gebildet sind, die fest mit einem ersten Kasten (4) verbunden ist, angeordnet an einem Chassiselement (5), welches in einem nicht verformbaren Endbereich (6) des Fahrzeuggehäuses ausgebildet ist, durch ein erstes energieabsorbierendes Element (7), das in den Kasten (4) eingeführt ist und sich gegen das hintere Ende der automatischen Kopplung (3) abstützt, durch zumindest ein zweites energieabsorbierendes Element (8), das den vorderen Teil des Kastens (4) mit der Vorderseite des nicht deformierbaren Endbereichs (6) des Fahrzeuggehäuses verbindet und durch zumindest eine Reihe von Elementen (9 und 9') zur programmierten plastischen Deformation, vorgesehen zwischen dem nicht deformierbaren Endbereich (6) des Fahrzeuggehäuses und dem eigentlichen Fahrzeuggehäuse.

2. Eisenbahnfahrzeug gemäß Anspruch 1, **dadurch gekennzeichnet, dass** die automatische Kopplung (3) durch einen Kopplungskopf (3') und durch einen Korpus gebildet ist, der den Kopf mit einer Kopplungshalterung (3'') verbindet, welche fest mit dem Kasten (4) mittels schmelzbarer Bolzen (10) verbunden ist.

3. Eisenbahnfahrzeug nach einem der Ansprüche 1 und 2, **dadurch gekennzeichnet, dass** das erste energieabsorbierende Element (7), eingeführt in den Kasten (4) und abgestützt gegen das hintere Ende der automatischen Kopplung (3), durch ein Teil aus einem zerstörbaren Kompositmaterial in der Form einer Röhre gebildet wird, die an ihrem vorderen Ende mit der Kopplungshalterung (3") der automatischen Kopplung (3) verbunden ist und sich am hinteren Ende am Boden des Kastens (4) abstützt, wobei der Boden zumindest eine Ausstoßöffnung für das Material aufweist, welche das energieabsorbierende Element (7) bildet, wobei die Öffnung einen Querschnitt hat, der kleiner ist als derjenige der Röhre.

4. Eisenbahnfahrzeug nach Anspruch 3, **dadurch gekennzeichnet, dass** die Röhre, die das energieabsorbierende Element (7) bildet, sich an einem Element abstützt, dessen Querschnitt demjenigen des Bodens des Kastens entspricht, wobei das Abstützelement (2) Ausstoßöffnungen für das Material aufweist, das das energieabsorbierende Element (7) bildet, die sich diametral gegenüberliegen.

5. Eisenbahnfahrzeug nach einem der Ansprüche 1 bis 4, **dadurch gekennzeichnet, dass** der Kasten (4) einen hinteren röhrenförmigen Teil zur Aufnahme des Korpus der Kopplungshalterung (3") der automatischen Kopplung (3) aufweist und einen vorhergehenden aufgeweiteten Teil zur Aufnahme des Kopfes (3`) der automatischen Kopplung (3) versehen mit Seitenrändern (4') bestimmt für ein Zusammenwirken mit dem oder den zweiten energieabsorbierenden Elementen (8), wobei die Vorderseite der Ränder (4') mit Einrichtungen (4") zum Schutz gegen Versatz versehen ist.

6. Eisenbahnfahrzeug nach einem der Ansprüche 1 bis 5, **dadurch gekennzeichnet, dass** das Chassiselement (5), das in einem nicht deformierbaren Endbereich (6) ausgebildet ist, einerseits an seinem Ende, das demjenigen gegenüberliegt, welches den Kasten (4) aufnimmt, eine Öffnung (11) aufweist, die für einen Ausstoß des Materials vorgesehen ist, welches das energieabsorbierende Element (7) bildet, während des Stauchens des letzteren und, andererseits, eine Länge, die zumindest gleich derjenigen des hinteren röhrenförmigen Teils des Kastens (4) ist.

7. Eisenbahnfahrzeug nach einem der Ansprüche 1 bis 3, 5 und 6, **dadurch gekennzeichnet, dass** der oder die zweiten energieabsorbierenden Elemente (8), die den vorderen Teil des Kastens (4) mit der Vorderseite des nicht deformierbaren Teils (6) des Fahrzeuggehäuses verbinden, sich in der Form von deformierbaren Trägern zeigen, die an ihren Enden verbolzt sind, jeweils vorne mit dem nicht deformierbaren Teil (6) des Fahrzeuggehäuses und an der Rückseite mit den Rändern (4') des Kastens (4), wobei die verformbaren Träger jeweils aus einer Anordnung von Blechen mit vorbestimmter Deformation gebildet sind.

8. Eisenbahnfahrzeug nach Anspruch 1, **dadurch gekennzeichnet, dass** das oder die Reihe von Elementen (9 und 9') mit programmierter plastischer Deformation, vorgesehen zwischen dem nicht deformierbaren Teil (6) des Fahrzeuggehäuses und dem eigentlichen Fahrzeuggehäuse sich in der Form einer Anordnung von Blechen mit progressiver Deformation zeigt, ausgehend von der Vorderseite zur Rückseite des Fahrzeugs.

9. Eisenbahnfahrzeug nach Anspruch 8, **dadurch gekennzeichnet, dass** die Elemente (9 und 9') zur programmierten plastischen Deformation, die das Chassis bilden, sich zwischen dem nicht deformierbaren Teil (6) des Fahrzeuggehäuses und dem eigentlichen Fahrzeuggehäuse erstrecken und über steife Bögen (12) mit den letzteren verbunden sind.

10. Eisenbahnfahrzeug nach einem der Ansprüche 8 und 9, **dadurch gekennzeichnet, dass** die Elemente (9 und 9') zur programmierten plastischen Deformation paarweise vorgesehen sind und über einen Zwischenbogen (13) verbunden sind, der seitlich eine Türöffnung und einen Technikraum begrenzt.

11. Eisenbahnfahrzeug nach einem der Ansprüche 1 und 8, **dadurch gekennzeichnet, dass** die Fahrerkabine mit einem Überlebenstunnel (14) in der Form eines Röhrennetzkäfigs versehen ist, der zwischen einer Schwenktraverse (16) und dem Kabinendach montiert ist und an dem steifen Bogen (12) zur Begrenzung des eigentlichen Fahrzeuggehäuses fixiert ist.

12. Eisenbahnfahrzeug nach Anspruch 10, **dadurch gekennzeichnet, dass** die Elemente (9') zur programmierten plastischen Deformation, die zwischen dem Zwischenbogen (13) und dem steifen Bogen (12), der das eigentliche Fahrzeuggehäuse begrenzt, so angeordnet sind, dass ihre progressive Deformation von der Rückseite zur Vorderseite des Fahrzeugs erfolgt.

13. Eisenbahnfahrzeug nach einem der Ansprüche 1 und 8 bis 12, **dadurch gekennzeichnet, dass** die Elemente (9 und 9') zur programmierten plastischen Deformation in der Form von Kästen vorgesehen sind, wobei die seitlichen und zentralen Seiten, die sich parallel zur Längsachse des Fahrzeugs erstrecken, Ausnehmungen des Materials in der Form von Öffnungen (15) oder Vorverformungen in der Form von Wellungen des Materials aufweisen.

14. Eisenbahnfahrzeug nach Anspruch 13, **dadurch gekennzeichnet, dass** die Öffnungen (15) der Elemente (9 und 9') zur programmierten plastischen Deformation vorteilhafterweise einen in Richtung der Deformation abnehmende Querschnitt und die Wellungen eine in die selbe Richtung abnehmende Amplitude aufweisen.

15. Eisenbahnfahrzeug nach einem der Ansprüche 1 und 8 bis 14, **dadurch gekennzeichnet, dass** die Bleche, die die Anordnung der Bleche zur Bildung der Elemente (9 und 9') zur programmierten plastischen Deformation bilden, eine Dicke aufweisen, die in Richtung der Deformation zunimmt.

16. Eisenbahnfahrzeug nach einem der Ansprüche 1 bis 7, **dadurch gekennzeichnet, dass** die Einrichtungen mit unterschiedlichen mechanischen Widerstandseigenschaften der hinteren Zone (2) zur dynamischen, plastischen Deformation, vorgesehen am hinteren Ende des Fahrzeugs, durch eine Kopplungshalterung (3") gebildet werden, die mit einem Zwischenkorpus des Kopplungsglieds verbunden ist und mit einem Kasten (4) zusammenwirkt, angeordnet in einem Chassiselement (5) der hinteren Zone (2) und fixiert an dem Chassis, wobei die Kopplungshalterung (3'') sich abstützt in dem Kasten (4) an einem Energieabsorptionselement (7) und mit dem Kasten (4) mittels Schmelzbolzen (10) verbunden ist, wobei das Chassis (5) andererseits an seinem Ende mit Einrichtungen zum Schutz gegen Versatz versehen ist.

17. Eisenbahnfahrzeug nach einem der Ansprüche 1, 3 bis 7 und 16, **dadurch gekennzeichnet, dass** die energieabsorbierenden Elemente (7 und 8) in der Form von austauschbaren Elementen realisiert sind, die im Falle von zerstörerischen Stößen leicht ersetzt werden können.
